# EUROPÄISCHE PATENTSCHRIFT

(11) **EP 0 603 506 B1**
(45) Veröffentlichungstag und Bekanntmachung des Hinweises auf die Patenterteilung: **07.01.1998**
(21) Anmeldenummer: 93117682.0
(22) Anmeldetag: 02.11.1993
(51) Int. Cl.: G01B 7/00, G01D 5/246, G05D 3/20

(54) **Verfahren zur Lagebestimmung eines elektromotorisch in zwei Richtungen angetriebenen Teils von Kraftfahrzeugen**
Method for position determination of vehicle parts driven in two directions by an electromotor
Méthode pour déterminer la position d'une partie de véhicules conduite en deux directions par un moteur électrique

(30) Priorität: 23.12.1992 DE 4243934
(43) Veröffentlichungstag der Anmeldung: 29.06.1994
(73) Patentinhaber: Bayerische Motoren Werke Aktiengesellschaft, 80788 München (DE)
(72) Erfinder: Wagner, Armin, D-85757 Karlsfeld (DE); Kagleder, Erich, D-81739 München (DE)

(56) Entgegenhaltungen:
- DE-A- 2 813 855
- DE-A- 3 311 229
- DE-A- 3 318 351
- DE-A- 3 447 419
- DE-A- 3 636 000
- DE-A- 4 225 081
- DE-A- 4 229 301
- FR-A- 2 608 273
- PATENT ABSTRACTS OF JAPAN vol. 11, no. 194 (P-588) 23. Juni 1987 & JP-A-62 018 654 (SONY CORP.) 27 Januar 1987
- PATENT ABSTRACTS OF JAPAN vol. 4, no. 78 (P-14) 6. Juni 1980 & JP-A-55 043 686 (FUJITSU LDT.) 27 März 1980

## Beschreibung

Die Erfindung bezieht sich auf ein Verfahren nach dem Oberbegriff des Patentanspruchs 1.

Bei einem derartigen aus der DE 33 11 229 A1 bekannten Verfahren wird die Zählrichtung für die in beiden Bewegungsrichtungen gleichartigen Impulse aus dem Befehl für die Drehrichtung des Antriebsmotors abgeleitet. Es wird dabei lediglich ein einziger Stellungsgeber benutzt. Dies bietet gegenüber einem vergleichbaren Verfahren, wie es aus der DE 33 24 107 Al bekannt ist, den Vorteil des geringeren Aufwands an Bauteilen. Bei der zuletzt genannten Druckschrift wird die Zählrichtung bzw. die Bewegungsrichtung des Teils mit Hilfe von zwei Stellungsgebern ermittelt, die ein hinsichtlich ihrer Phase mit der Bewegungsrichtung in einem eindeutigen Zusammenhang stehendes Ausgangssignal liefern.

Die Verwendung nur eines einzigen Stellungsgebers bringt aber dann besondere Probleme, wenn der Antriebsmotor abgeschaltet wird. In der Regel bewegt sich das Teil aufgrund seiner Trägheit und der des Antriebsmotors noch ein kurzes Stück weiter. Zusätzlich oder alternativ kann es dazu kommen, daß das Teil beispielsweise aufgrund von mechanischen Rückwirkungen in entgegengesetzter Richtung bewegt wird. In beiden Bewegungsrichtungen sind die vom Stellungsgeber gelieferten Impulse in ihrer Form im Prinzip gleich. Auf der anderen Seite ist es notwendig, die Bewegungsrichtung eindeutig zu erkennen, da nur dann der Zählerstand ein exaktes Maß für die tatsächliche Stellung des Teils ist.

Der Erfindung liegt die Aufgabe zugrunde, ein Verfahren der eingangs genannten Art zu schaffen, bei dem auf eindeutige Weise die Bewegungsrichtung des Teils erkannt und durch eine entsprechende Änderung des Zählerstands berücksichtigt wird.

Die Erfindung löst diese Aufgabe durch die kennzeichnenden Merkmale des Patentanspruchs 1.

Die Erfindung beruht auf der Erkenntnis, daß zwischen der Abgabe eines Impulses durch den Stellungsgeber bei einer Weiterbewegung des Teils in der ursprünglichen Bewegungsrichtung und dem Abschaltzeitpunkt für den Antriebsmotor ein definierter zeitlicher Zusammenhang besteht. Dieser drückt sich aus in dem zeitlichen Abstand, bis zu dem nach dem Abschalten des Antriebsmotors spätestens ein durch den Stellungsgeber ausgelöster Impuls auftritt. Wird nach Ablauf des vorgegebenen Zeitmaßes noch ein Impuls registriert, so stammt dieser nicht von einer Bewegung des Teils in der ursprünglichen Bewegungsrichtung.

Um auch die durch die mechanischen Reaktionen verursachten Gegenbewegungen des Teils registrieren zu können, kann dann, wenn der Beginn eines Impulses erst nach Ablauf der vorgegebenen Zeitspanne erfolgt, eine Bewegung des Teils in entgegengesetzter Richtung zugeordnet werden.

Damit geht in keinem Fall ein Impuls verloren. Der Zählerstand entspricht exakt der tatsächlichen Lage des Teils. Abgleichmaßnahmen für den Zähler, beispielsweise ein Setzen auf den Wert 0 bzw. auf den Höchstwert bei Erreichen eines Endanschlags können dabei entfallen.

Zusätzlich zum Beginn eines Impulses kann auch der Verlauf des vom Stellungsgeber nach Abschalten des Antriebsmotors gelieferten Impulses analysiert werden. Damit ist es noch exakter möglich, die Bewegungsrichtung und das Ausmaß der Bewegung des Teils zu erkennen und durch eine entsprechende Beeinflussung des Zählers zu berücksichtigen.

Die Erfindung ist anhand der Zeichnung weiter erläutert. Es zeigt
- Fig. 1 und 2: den Impulsverlauf für eine Ausführungsform der Erfindung,
- Fig. 3: den Impulsverlauf für eine weitere Ausführungsform.

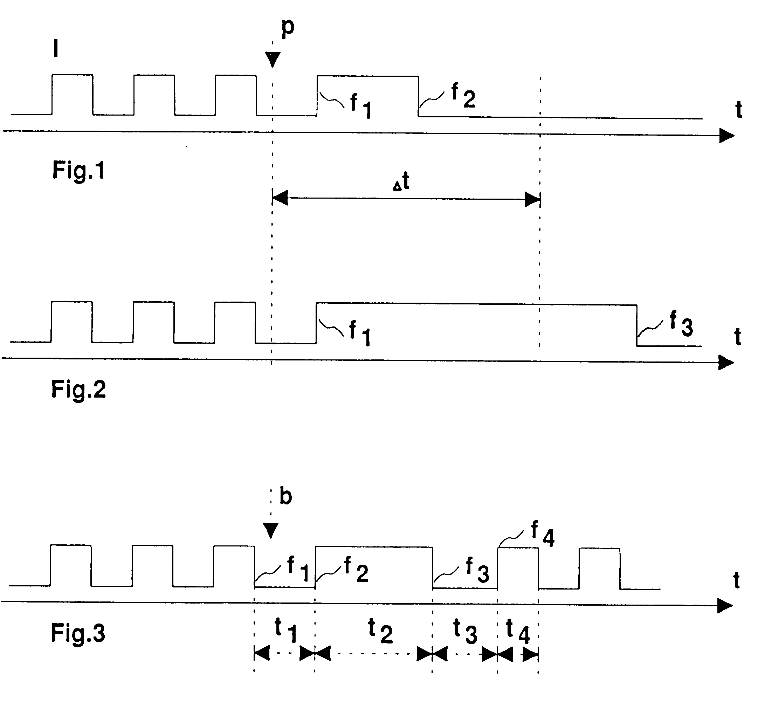

Beim Ausführungsbeispiel von Fig. 1 ist der Impulsverlauf schematisch dargestellt, wie er sich für den Anwendungsfall eines Fensterhebers ergibt. Der nicht dargestellte Antriebsmotor ist mit einem Stellungsgeber versehen, der wie in der DE 33 11 229 Al entsprechend der Drehbewegung des Antriebsmotors eine Impulsfolge I liefert. Die Impulse entsprechen in ihrem zeitlichen Abstand von z. B. 10 msec einer Änderung der Drehlage des Antriebsmotors um einen Winkel von 180°. Die Impulse werden über ein nicht dargestelltes Differenzierglied geführt, mit dem die zeitliche Lage der Impulsflanken bestimmt wird. Dabei spielt es keine Rolle, ob es sich um eine Anstiegs- oder eine Abfallflanke handelt.

Bei Abschalten des Antriebsmotors, in den Diagrammen von Fig. 1 und 2 durch einen Pfeil p gekennzeichnet, kann sich abhängig von den jeweiligen mechanischen Gegebenheiten, das Teil noch in der ursprünglichen Bewegungsrichtung weiterbewegen. Dies ist in Fig. 1 dargestellt.

Vom Stellungsgeber wird noch ein Impuls geliefert, dessen Flanken f₁ und f₂ einen definierten zeitlichen Abstand vom Abschaltzeitpunkt besitzen. Abhängig vom jeweiligen Anwendungsfall läßt sich ein Zeitmaß vorgeben, innerhalb dessen auftretende Flanken einer Weiterbewegung des Teils in der ursprünglichen Bewegungsrichtung zugerechnet werden. Dies ist in Fig. 1 durch die Flanken f₁ und f₂ und das Zeitmaß Δt dargestellt.

Treten nach Ablauf dieser Zeitspanne Δt noch Impulsflanken auf, so haben diese ihre Ursache in einer Gegenbewegung des Teils, wie sie durch mechanische Reaktionen, beispielsweise einen Dichtgummi für das bewegte Seitenfenster hervorgerufen werden. Eine derartige Impulsflanke f₃ ist in Fig. 2 dargestellt. Die dort gezeigte Impulsflanke f₁ entspricht der von Fig. 1 und ist auf die zunächst auftretende Weiterbewegung des Teils zurückzuführen. Wird beispielsweise durch die zunächst gegebene Bewegungsrichtung des Teils der Zähler entsprechend den eintreffenden Flanken jeweils um den Wert 1 erhöht, so wird der Zähler bei dem in Fig. 2 dargestellten Fall durch die Impulsflanke f₁ zunächst nochmals um eine Einheit erhöht, durch die Impulsflanke f₃ dann jedoch um eine Einheit verringert. Das Teil befindet sich dann in einer Lage, die es auch bei Abschalten des Antriebsmotors, d. h. zu Beginn der Zeitspanne Δt besitzt.

Wird das Teil dann in der entgegengesetzten Richtung bewegt, so führen die dann auftretenden Impulse, die dieselbe Form wie die Impulsfolge I besitzen, zu einer Verringerung des Zählerstands bis auf einen minimalen Wert, beispielsweise den Wert 0, bei Erreichen der in der dann wirksamen Bewegungsrichtung gelegenen Endlage.

In der Fig. 3 ist ein weiteres Ausführungsbeispiel hinsichtlich des Impulsverlaufs gezeigt. Dabei wird der Antriebsmotor zu dem durch den durch den Pfeil b markierten Zeitpunkt umgepolt und die sich dann ergebende Impulsfolge bewegungsrichtig in den Zähler eingelesen. Entscheidend für die Umkehrung der Zählrichtung ist dabei der Abstand der Flanken zueinander. Solange der Motor bremst, werden die Abstände größer t₂ > t₁. Nach Umkehrung der Drehrichtung beschleunigt der Motor und die Abstände werden wieder kleiner t₃ < t₂. Somit ist nach dem Auftreten der Flanke f₃ die Zählrichtung zu invertieren, d. h. die Flanken f₁, f₂ und f₃ werden nach der ursprünglichen, die Flanken f₄ und f₅ der umgekehrten Bewegungsrichtung zugerechnet.

## Patentansprüche

1. Verfahren zur Lagebestimmung eines elektromotorisch in zwei Richtungen angetriebenen Teils von Kraftfahrzeugen mit Hilfe eines Zählers, bei dem Bewegungen des Teils in seinen beiden Richtungen Zählimpulse (I) eines Stellungsgebers in den Zähler zum Verringern beziehungsweise Erhöhen des Zählerstandes entsprechend der vorgegebenen Bewegung eingegeben werden,
dadurch gekennzeichnet,
daß nach Abschalten des Antriebsmotors die vom Stellungsgeber gelieferten Impulsflanken (f₁,f₂,...) in ihrem zeitlichen Abstand (Δt) vom Abschaltzeitpunkt (p) analysiert werden und daß diese Impulsflanken (f₁,f₂,...) einer Weiterbewegung des Teils zugeordnet werden, wenn der zeitliche Abstand (Δt) zum Abschaltzeitpunkt (p) ein vorgegebenes Maß nicht übersteigt.

2. Verfahren nach Anspruch 1, dadurch gekennzeichnet, daß die Impulsflanken (f₁,f₂,...) einer Bewegung des Teils in entgegengesetzter Richtung zugeordnet werden, wenn der zeitliche Abstand (Δt) zum Abschaltzeitpunkt (p) ein vorgegebenes Maß übersteigt.

3. Verfahren nach einem der Ansprüche 1 oder 2, dadurch gekennzeichnet,
daß zusätzlich der Abstand (t₁,t₂,...) zweier aufeinanderfolgender Impulsflanken (f₁,f₂,...) analysiert wird und daß die Impulsflanken (f₁, f₂, ...) nur dann registriert werden, wenn der Abstand (t₁,t₂,...) ein vorgegebenes Maß unterschreitet.

## Claims

1. A process for the determination of the position of a motor vehicle part which is driven by an electric motor in two directions, with the aid of a counter into which counting pulses (I) of a position transmitter of movements of the part in its two directions are entered to reduce or increase the counter status corresponding to the given movement, **characterised in that,**
after the disconnection of the drive motor the pulse edges (f₁,f₂,...) are analysed for their separation in time (Δt) from the point of time of disconnection (p) and that these pulse edges (f₁, f₂,...) are attributed to a further movement of the part, if the separation in time (Δt) from the point of disconnection (p) does not exceed a prescribed amount.

2. A process according to Claim 1, **characterised in that** the pulse edges (f₁, f₂,...) are attributed to a movement of the part in the opposite direction, if the difference in time (Δt) to the point of disconnection (p) exceeds a prescribed amount.

3. A process according to Claims 1 or 2, **characterised in that**
the separation (t₁, t₂,...) of two sequential pulse edges (f₁, f₂,...) is analysedand that the pulse edges (f₁, f₂,...) are only registered if the separation (t₁, t₂,...) falls below a prescribed amount.

## Revendications

1. Procédé pour déterminer la position d'une pièce de véhicule automobile entraînée dans les deux directions par un moteur électrique, à l'aide d'un compteur recevant, pour les déplacements de la pièce dans les deux directions, les impulsions de comptage (I) fournies par un compteur de position pour le compteur, pour incrémenter ou décrémenter l'état de comptage selon le sens de déplacement précédent,
caractérisé en ce qu'
après la coupure du moteur, on analyse les flancs impulsionnels (f₁, f₂...) fournis par le capteur de position pour leur intervalle de temps (Δt) par rapport au point de coupure (p) et,
on attribue des flancs d'impulsions (f₁, f₂...) à une poursuite du mouvement de la pièce si l'intervalle de temps (Δt) par rapport à l'instant de la coupure (p) ne dépasse une valeur prédéterminée.

2. Procédé selon la revendication 1,
caractérisé en ce que
les flancs impulsionnels (f₁, f₂...) sont attribués à un mouvement de la pièce dans la direction opposée si l'intervalle de temps (Δt) par rapport à l'instant de la coupure (p) dépasse une mesure prédéterminée.

3. Procédé selon l'une des revendications 1 ou 2,
caractérisé en ce qu'
en outre on analyse la distance (t₁, t₂...) de deux flancs d'impulsions successifs (f₁, f₂...) et on enregistre les flancs d'impulsions (f₁, f₂...) si la distance (t₁, t₂...) passe en dessous d'une mesure prédéterminée.
